# FASCICULE DE BREVET EUROPEEN

(11) **EP 1 315 319 B1**
(45) Date de publication et mention de la délivrance du brevet: **20.08.2008**
(21) Numéro de dépôt: 02292859.2
(22) Date de dépôt: 18.11.2002
(51) Int. Cl.: H04B 10/10

(54) **Système de transmission de signaux numériques pour véhicule spatial**
Digitales Signalübertragungssystem für ein Raumfahrzeug
Digital signal transmission system for a spacecraft

(30) Priorité: 27.11.2001 FR 0115301
(43) Date de publication de la demande: 28.05.2003
(73) Titulaire: Alcatel Lucent, 75008 Paris (FR)
(72) Inventeur: Gayrard, Jean-Didier, 31100 Toulouse (FR); Sotom, Michel, 31100 Toulouse (FR); Maignan, Michel, 31860 Pins Justaret (FR)
(74) Mandataire: Esselin, Sophie

(56) Documents cités:
- EP-A- 0 194 915
- EP-A- 1 225 713
- FR-A- 2 696 890
- US-A- 4 975 926

## Description

La présente invention se rapporte au domaine des systèmes de transmission de signaux pour un véhicule spatial.

Elle concerne plus particulièrement un système de transmission de signaux numériques, particulièrement de télémesure et/ou de télécommande, pour un véhicule spatial.

A bord d'un véhicule spatial tel qu'un satellite sont embarqués de nombreux équipements électroniques tels que des amplificateurs, des récepteurs, des calculateurs, .... Ces équipements, souvent redondants pour des raisons de fiabilité, appartiennent par exemple au système de transmission de signaux télévisés ou téléphoniques par satellite, ou bien aux systèmes assurant les fonctions de service à bord du satellite (gestion de bord, pilotage, alimentation, etc...).

Lors du lancement du satellite, une configuration de fonctionnement nominale est choisie, c'est-à-dire que l'on a sélectionné un certain nombre d'équipements pour les fonctions de service, un certain nombre de canaux pour la transmission de signaux téléphoniques et un certain nombre de canaux pour la transmission de signaux télévisés. Au cours de la vie du satellite, et pour des raisons commerciales notamment, il se peut que cette configuration soit modifiée. Afin de reconfigurer les équipements pour satisfaire à la demande, les stations de commande et de contrôle au sol émettent par voie hertzienne des signaux de télécommande (TC) transmis à un récepteur se trouvant à bord du satellite et les envoyant à une Unité Centrale numérique UC de contrôle constituée d'une unité de traitement de ces signaux appelée CTU ("Control Terminal Unit") et de plusieurs unités de transmission appelées RTA ("Remote Terminal Unit") chargées de transmettre ces signaux aux différents équipements. Les signaux de TC peuvent aussi servir à choisir parmi les équipements redondants ceux qui seront effectivement actifs, notamment au niveau des systèmes assurant les fonctions de service à bord du satellite. Les signaux de TC servent donc à contrôler et assurer la gestion du fonctionnement de l'ensemble des équipements électroniques embarqués à bord.

Il est par ailleurs toujours souhaitable d'effectuer des tests de contrôle, soit pour vérifier que les signaux de TC ont bien été exécutés, soit pour détecter depuis le sol des pannes éventuelles risquant de nuire au bon fonctionnement du satellite ou de perturber les signaux transmis. Les différents équipements émettent pour cela en direction de l'Unité Centrale des signaux de télémesure(TM), transmis aux stations au sol par des émetteurs adaptés se trouvant à bord du satellite et en relation avec l'Unité Centrale. Les signaux de TM peuvent être émis soit en réponse à des signaux de TC, soit de manière systématique pour le contrôle permanent de l'état des équipements embarqués.

La transmission des signaux de TM et de TC entre l'Unité Centrale et les différents équipements est effectuée de manière classique au moyen de liaisons filaires par l'intermédiaire de câbles ; l'ensemble des liaisons filaires destinées à la transmission des signaux de télécommande et de télémesure est appelé harnais TM-TC.

On sait qu'un souci constant lors de la conception d'un satellite est de réduire autant que possible la masse embarquée, afin de diminuer le coût du lancement ainsi que le coût en carburant nécessaire au maintien du satellite en orbite, ou bien afin d'augmenter la durée de maintien en orbite d'un satellite pour une même quantité de carburant embarquée.

Or le harnais TM-TC a une masse importante (de l'ordre de quelques dizaines de kilogrammes). En effet, les liaisons filaires sont nombreuses, puisque chacune d'elles doit être bidirectionnelle entre l'équipement considéré et l'Unité Centrale, afin d'assurer la séparation d'une part des signaux de TM et de TC, et d'autre part des signaux concernant chacun des équipements. De plus, le coût d'un tel harnais est élevé du fait de la durée de conception du harnais, et des temps de test et de vérification de chaque fil et connecteur. En outre, les câbles utilisés pour réaliser ces liaisons sont la plupart du temps des câbles blindés pour éviter les perturbations dues à des rayonnements électromagnétiques parasites.

Les solutions connues pour la réduction des harnais en masse et en nombre de liaisons existent sous deux formes : les bus filaires pour la réduction du nombre de fils, ou les liaisons sans fils pour la suppression des fils.

Le principe du bus est de multiplexer dans le temps les signaux de TM/TC préalablement numérisés et de les véhiculer en série et à haute cadence (∼1 Mbps) sur un bus filaire. Les quelques fils du bus sont reliés, par exemple, de proche en proche aux équipements ("daisy chain" en anglais). Cette solution ne supprime pas entièrement le harnais et oblige les équipements reliés à fonctionner à grande cadence. Les problèmes de compatibilité électromagnétique augmentent et les blindages nécessaires accroissent la masse du harnais. Les problèmes de propagation de pannes complique les schémas de redondance. Enfin, les modules terminaux en bout de la liaison du bus dans les équipements sont complexes et largement surdimensionnés pour le volume de TM/TC habituel des équipements micro-ondes ordinaires (par exemple pour l'amplificateur de canal ou le convertisseur de fréquences).

Le principe des liaisons sans fils consiste, lui, à utiliser soit des ondes radiofréquences, soit de la lumière infrarouge (IR) pour transmettre, par rayonnement en espace libre, les signaux.

En ce qui concerne les liaisons radiofréquences, celles-ci complexifient notablement les problèmes de compatibilité électromagnétique (avec l'équipement lui-même, les bancs de test, le satellite, le lanceur et le pas de tir). La caractérisation du canal de transmission est très délicate (intérieur d'une cage de Faraday encombrée de masses métalliques) et évolue selon le degré d'intégration du satellite (panneaux à plat, module de communication intégré, satellite en configuration de vol).

Quant au principe de transmission de signaux TM/TC par infrarouge, un système utilisant un tel principe est décrit dans le brevet FR2696890 déposé par la société Alcatel Espace. Malgré ses multiples intérêts, les liaisons infrarouges posent des problèmes de zones d'ombre et requièrent une visibilité optique entre émetteurs et récepteurs, ce qui contraint l'aménagement du satellite. En outre, les débits envisageables dépendent fortement de la géométrie du système, sachant que cette géométrie évolue selon le degré d'intégration du satellite.

EP 1225713 décrit un système de transmission de signaux pour un véhicule d'aviation comprenant une liaison de transmission de signaux infra-rouges. US 4975926 décrit un système de transmission ayant les moyens de transmission d'un faisceau de communication infrarouge.

Le but de la présente invention est donc d'obtenir un système de transmission de signaux numériques de télémesure et/ou de télécommande pour un véhicule spatial qui puisse s'affranchir de la majorité des problèmes de visibilité et de bilan de liaison caractéristiques des liaisons infrarouges dans un espace limité et encombré (intérieur de satellite), tout en conservant ses avantages.

A cet effet, l'invention a pour objet un système de transmission de signaux numériques pour un véhicule spatial, comprenant au moins un émetteur et au moins un récepteur et une liaison de transmission entre l'émetteur et le récepteur, caractérisé en ce que la liaison entre lesdits émetteur et récepteur comprend une première partie définie par un mode de propagation guidée apte à transmettre lesdits signaux numériques convertis en signaux infrarouges, et une seconde partie consécutive à ladite première partie et définie par un mode de propagation rayonnée en espace libre, et des moyens de jonction entre la première et la seconde parties pour la transmission des signaux entre la première et la seconde partie.

De cette sorte, l'invention présente l'avantage de combiner astucieusement les deux modes de propagation de l'infrarouge (guidé et espace libre) en supprimant les inconvénients de chaque mode (le connecteur pour le mode guidé et la zone d'ombre pour le mode de rayonnement en espace libre) tout en bénéficiant des avantages de chaque mode (pas de zone d'ombre pour le mode guidé et pas de connecteurs pour le mode rayonné).

Grâce à l'invention, un réseau de fibres optiques peut transporter les signaux numériques depuis un émetteur, par exemple un contrôleur TM/TC, vers les zones voisines d'un récepteur qui peut être un équipement. En bout de fibre optique, la lumière infrarouge est propagée en espace libre vers des moyens de réception qui peuvent être des détecteurs montés sur les équipements. L'absence de connecteurs sur les équipements simplifie l'intégration.

Selon un mode de réalisation, l'émetteur et/ou le récepteur comprend des moyens de contrôle pour l'émission de signaux de télécommande, et/ou un équipement capable d'émettre des signaux de télémesure à destination de l'émetteur.

Selon un mode de réalisation, ladite première partie en fibre optique est apte à véhiculer de façon bidirectionnelle les signaux infrarouges.

Selon un mode de réalisation, les moyens de jonction entre la première et la seconde parties comprennent des moyens d'émission en espace libre des signaux infrarouges véhiculés sur la première partie, ces derniers moyens d'émission étant aptes à rayonner lesdit signaux infrarouges vers des moyens de réception de signaux infrarouges rayonnés du récepteur, et/ou des moyens de réception des signaux infrarouges véhiculés en espace libre sur la seconde partie, ces derniers moyens de réception étant aptes à recevoir lesdit signaux infrarouges de moyens d'émission de signaux infrarouges du récepteur.

Selon un mode de réalisation, lesdits moyens d'émission et de réception de l'émetteur et du récepteur sont aptes à fonctionner de façon bidirectionnelle.

Selon un mode de réalisation, lesdits moyens d'émission et de réception de l'émetteur et du récepteur comprennent des diodes à infrarouges.

Selon un mode de réalisation, une unique fibre optique est employée pour réaliser la liaison de ladite première partie.

Selon un mode de réalisation, le protocole de communication régissant la communication entre lesdits émetteur et récepteur est un protocole du type maître-esclave dans lequel l'émetteur est le maître et le récepteur est l'esclave.

Selon un mode de réalisation, deux longueurs d'onde différentes sont utilisées sur ladite première partie en fibre optique, une première des longueurs d'onde pour la transmission des signaux infrarouges de l'émetteur vers le récepteur et la seconde pour la transmission des signaux infrarouges du récepteur vers l'émetteur.

Selon un mode de réalisation, le système comprend des moyens d'ajustage du cône de rayonnement et d'acceptance desdits moyens d'émission et/ou des moyens de réception formant moyens de jonction, et/ou en ce que le système comprend des moyens de filtrage des rayonnements parasites.

Selon un mode de réalisation, lesdits moyens d'émission et/ou des moyens de réception formant moyens de jonction sont agencés de manière à illuminer une zone comportant plusieurs desdits récepteurs, et en ce que lesdits moyens de réception et/ou d'émission des récepteurs équipent respectivement les récepteurs de manière à être en visibilité optique desdits moyens d'émission et/ou des moyens de réception formant moyens de jonction.

Selon un mode de réalisation, lesdits moyens d'émission et/ou des moyens de réception formant moyens de jonction sont agencés à proximité desdits moyens de réception et/ou d'émission équipant un récepteur de manière à n'illuminer uniquement celui-ci.

Selon un mode de réalisation, une pièce de guidage est insérée entre l'extrémité de la fibre optique et les moyens de réception et/ou d'émission équipant le récepteur.

Selon un mode de réalisation, ladite pièce de guidage est comprise dans un panneau de support dudit récepteur et en ce que, sur une longueur déterminée, la fibre optique longe le panneau ou est comprise dans celui-ci.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une représentation schématique d'un mode de réalisation d'un système selon l'invention,
- Figure 2 : une représentation schématique d'une variante du système de la figure 1,
- Figure 3 : une représentation schématique d'une seconde variante du système de la figure 1,

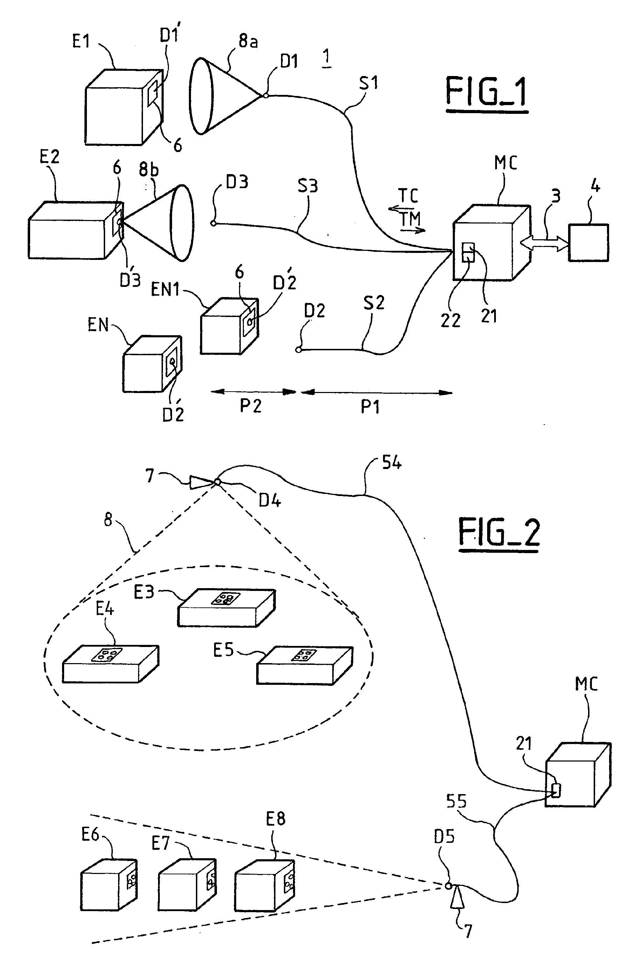

La figure 1 représente un système pour la transmission de signaux de télécommande TC à des équipements E1, E2, E3..., EN, et d'autre part pour la réception de signaux de télémesure émis par ces derniers. Les équipements E1 à EN sont tous disposés sur les parois intérieures d'un satellite, non représentées, et ce pour des raisons d'écoulement du flux thermique vers l'espace extérieur au satellite.

Le système 1 comprend :
- un module de contrôle MC qui gère les transmissions vers et depuis les équipements (format et protocole),
- un convertisseur 21 des signaux de commande TC sous forme infrarouge à destination des équipements,
- un détecteur et convertisseur 22 pour détecter et convertir les signaux d'acquisition TM émis par les équipements,
- une interface 3 avec un système 4 de gestion de données du satellite, ou unité centrale numérique, généralement dénommé calculateur de bord. Le calculateur de bord assure également l'interface avec des émetteurs et des récepteurs (non représentés) en communication avec des stations au sol.

Le module de contrôle peut être séparé ou être intégré au calculateur de bord.

Le module de contrôle a pour fonction de mettre les signaux de TC sous forme numérique (si ces derniers ne le sont pas déjà), puis de les coder (les moyens exerçant ces deux fonctions étant connus en soi, ne sont pas représentés) , et enfin de les convertir en signaux optiques au niveau du convertisseur 21 afin de les véhiculer dans les fibres optiques 51 et 52. Les extrémités des fibres 51, 52 sont équipées de dispositifs optiques D1, D2 permettant la diffusion rayonnée en espace libre des signaux optiques vers des photo-récepteurs D1', D2' correspondants. Ces photodétecteurs D1', D2' sont agencées sur une face des équipements récepteurs EN-1, EN en regard des extrémités correspondantes des fibres.

Ces dispositifs peuvent être réduits à leur plus simple expression sous la forme d'extrémité de fibre façonnée (taillager, polissage). Ces dispositifs peuvent être pourvus, comme expliqué plus loin, de systèmes optiques géométriques plus complexes : lentilles, prismes, collimateurs, miroirs plans, concaves, convexes, etc, connus en soi.

Il est bien entendu que tout dispositif optique de réception/émission rayonnée en espace libre de signaux infrarouges peut être envisagé à la place des dispositifs D1, D2.

Les dispositifs optiques D1 à D3 servent alors d'interfaces de jonction entre les deux modes de transmission.

Les photodétecteurs D1', D2' équipant les équipements font partie d'un module 6 infrarouge assurant la conversion des signaux infrarouges rayonnés reçus en signaux électriques pour un traitement ultérieur.

Un équipement, tel que celui référencé E2, est lui destiné à fournir au module de contrôle une information de télémesure. Son module 6 infrarouge comporte une photo-diode D3' émettrice à infrarouges et son optique associée. Le dispositif optique D3 en regard de D3' et agencé à l'extrémité de la fibre 53 est apte à fonctionner en réception. Il a été représenté sur la figure 1 les diagrammes 8a et 8b de rayonnement respectif du dispositif optique D1 et du module 6 à titre d'illustration. On a également schématisé sous forme de flèches, une première partie référencée P1 correspondant à la partie de liaison entre le module de contrôle et l'équipement qui est formée par fibre optique et une seconde partie P2 qui est une liaison par rayonnement en espace libre.

On notera que le module 6 assure également la gestion des formats et du protocole.

Le système comprend toutes les redondances nécessaires (duplications de liaisons module de contrôle-équipements, etc) pour obtenir le niveau de fiabilité recherché et l'absence de point de panne unique.

En variante, il peut être utilisé une unique fibre pour transporter de façon bidirectionnelle les signaux infrarouges entre d'une part le module de contrôle et d'autre part les équipements E1, ... EN. Ceci présuppose de définir un protocole de communication basé sur le principe de maître esclave où seul le maître (le module de contrôleur) a l'initiative de la transmission et définit les priorités. Les esclaves (les équipements) n'émettent chacun à leur tour qu'à la requête du contrôleur.

En outre, il est avantageux d'utiliser deux longueurs d'onde différentes sur cette seule fibre, l'une des longueurs d'onde étant réservée pour la voie aller (pour le transport des signaux TC de télécontrôle) et l'autre longueur d'onde étant elle réservée pour la voie retour (transport des signaux TM de télémesure). Cette caractéristique supplémentaite d'utilisation de deux longueurs d'onde permet de réaliser une meilleure isolation entre les signaux de la voie aller avec ceux de la voie retour, et rend possible aussi la mise en oeuvre de différents protocoles de communication.

Il est à remarquer que le harnais à fibre optique peut être de conception identique pour tous les satellites et charges utiles (ce qui permet une standardisation de celui-ci). Ce harnais optique peut être passif (dans le cas de fibres et de coupleurs optiques passifs) ou actifs (lorsque des amplificateurs de lumière sont insérés sur la partie P1).

Comme représenté sur la variante de la figure 2, l'extrémité de la fibre 5 peut être munie d'un dispositif 7 optique d'ajustage, du type d'une lentille, miroir, ou prisme par exemple, pour ajuster, modifier ou orienter le cône 8b de rayonnement et le cône 8a d'acceptance ou encore filtrer les rayonnements parasites. L'extrémité de la fibre peut également être façonnée pour modifier ou orienter le cône de rayonnement / acceptance.

Un aspect important de l'invention est l'étendue de la zone où intervient la propagation en espace libre des signaux infrarouges : celle-ci peut être large (illumination azimutale ou zénithal) ou réduite (illumination semi-guidée).

Dans le cas d'une illumination d'étendue large, comme représenté sur la figure 2, les dispositifs optiques D4 et D5 des fibres 54 et 55 illuminent une large zone contenant plusieurs équipements E3 à E8.

Cette illumination est zénithale, c'est à dire au dessus des équipements, pour les équipements E3 à E5 illuminés par le dispositif D4 et qui ont leur module 6 infrarouge sur la façade supérieure ; l'illumination est azimutale, c'est à dire sur les façades latérales des équipements E6 à E8 qui sont alors alignés dans le cône d'illumination de la diode D5.

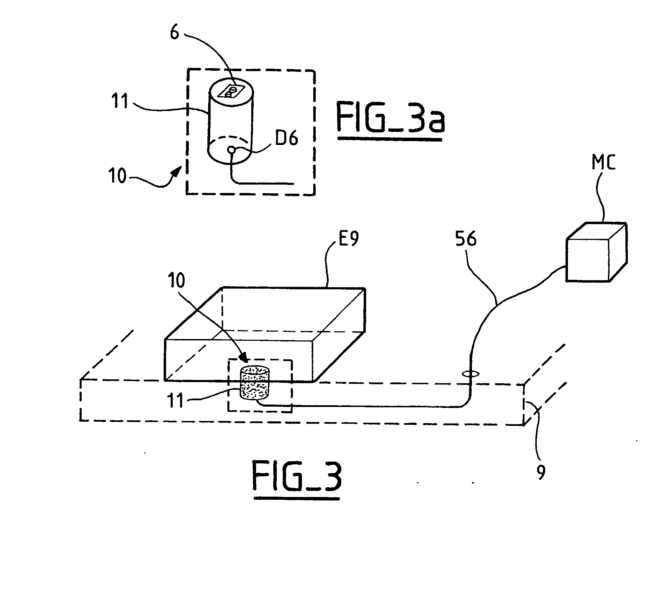

La figure 3 illustre le cas d'une illumination semi-guidée. Une fibre 56 relie le module MC de contrôle à un dispositif optique D6 émettreur/récepteur à infrarouges. Dans ce mode de réalisation, l'extrémité de la fibre que constitue le dispositif D6 illumine le module 6 à infrarouges d'un seul équipement 59 à très courte distance. L'extrémité de la fibre aboutit à l'extrémité d'un tube 11 (vide, transparent ou fictif), le module 6 de l'équipement étant disposé à l'autre extrémité du tube. Le tube peut être un "insert" spécial, ou pièce de guidage 11, l'équipement E9 est alors monté sur son panneau 9 de support avec le module 6 à infrarouges sur la face de montage et aligné avec l'inser spécial. Un exemple de cette pièce de guidage est présentée dans une vue agrandie dans la zone 10.

La pièce de guidage est insérée dans le panneau 9 et la fibre optique peut en sortir pour longer sur une longueur prédéterminée le panneau jusqu'au module de contrôle, ou comme représenté, être intégrée dans le panneau. Le même principe d'illumination semi-guidée peut être retenu pour un module à infrarouges monté sur une des faces latérales de l'équipement.

Bien entendu, les modes de réalisation d'illuminations ne sont pas limités à ceux décrits.

Ainsi, les avantages de l'invention sont multiples. En effet, l'invention permet :
- la réduction du harnais en masse et en nombre de liaisons. La fibre optique est moins lourde et plus souple que les câbles en cuivre. Une seule fibre suffit pour les deux sens de transmission (hors redondance) et pour tous les signaux de TM/TC ;
- l'élimination des problèmes de compatibilité électromagnétique et de décharge électrostatique ;
- la réduction des durées d'assemblage, test et intégration ;
- la standardisation du harnais et de son routage pour les bus (les plate-formes de satellites) d'une même famille (une même famille étant définie par un même châssis et des caractéristiques physiques communes).

En plus, l'invention permet la combinaison astucieuse des deux modes de propagation des signaux optiques infrarouges sur la même liaison, à savoir l'espace libre et la fibre optique, et ce sans composant actif d'interface entre les deux parties. Ceci permet de s'affranchir de la majorité des problèmes de visibilité et de bilan de liaison des liaisons sans fils infrarouges dans un espace limité et encombré (intérieur de satellite) et d'en conserver les avantages (pas de connecteur et de probléme de compatibilité électromagnétique).

## Revendications

1. Système de transmission de signaux numériques pour un véhicule spatial, comprenant au moins un émetteur (MC, E2) de signaux infrarouges et au moins un récepteur (E1-E9) de signaux infrarouges et une liaison (P1, P2) de transmission entre l'émetteur et le récepteur, **caractérisé en ce que** la liaison entre lesdits émetteur et récepteur comprend une première partie (P1) formée par fibre optique définie par un mode de propagation guidée apte à transmettre lesdits signaux numériques (TM, TC) convertis en signaux infrarouges de manière guidée, et une seconde partie (P2) consécutive à ladite première partie et définie par un mode de propagation rayonnée en espace libre, et des moyens (D1-D6) de jonction entre la première et la seconde parties pour la transmission des signaux entre la première et la seconde partie.

2. Système selon la revendication 1, **caractérisé en ce que** l'émetteur et/ou le récepteur comprend des moyens de contrôle (MC) pour l'émission de signaux de télécommande, et/ou un équipement (E2) capable d'émettre des signaux de télémesure à destination de l'émetteur.

3. Système selon la revendication 1 ou 2, **caractérisé en ce que** ladite première partie en fibre optique est apte à véhiculer de façon bidirectionnelle les signaux infrarouges.

4. Système selon l'une des revendications précédentes, **caractérisé en ce que** les moyens de jonction entre la première et la seconde parties comprennent des moyens d'émission (D1, D2, D4-D6) en espace libre des signaux infrarouges véhiculés sur la première partie, ces derniers moyens d'émission étant aptes à rayonner lesdit signaux infrarouges vers des moyens (D1', D2') de réception de signaux infrarouges rayonnés du récepteur, et/ou des moyens de réception (D3) des signaux infrarouges véhiculés en espace libre sur la seconde partie, ces derniers moyens de réception étant aptes à recevoir lesdit signaux infrarouges de moyens (D3') d'émission de signaux infrarouges du récepteur.

5. Système selon l'une des revendications précédentes, **caractérisé en ce que** lesdits moyens d'émission et de réception de l'émetteur et du récepteur sont aptes à fonctionner de façon bidirectionnelle.

6. Système selon l'une des revendications précédentes, **caractérisé en ce que** lesdits moyens d'émission et de réception de l'émetteur et du récepteur comprennent respectivement une diode à infrarouges et un photorécepteur.

7. Système selon l'une des revendications précédentes, **caractérisé en ce qu'**une unique fibre optique est employée pour réaliser la liaison de ladite première partie.

8. Système selon l'une des revendications précédentes, **caractérisé en ce que** le protocole de communication régissant la communication entre lesdits émetteur et récepteur est un protocole du type maître-esclave dans lequel l'émetteur est le maître et le récepteur est l'esclave.

9. Système selon l'une des revendications précédentes en combinaison avec la revendication 3, **caractérisé en ce que** deux longueurs d'onde différentes sont utilisées sur ladite première partie en fibre optique, une première des longueurs d'onde pour la transmission des signaux infrarouges de l'émetteur vers le récepteur et la seconde pour la transmission des signaux infrarouges du récepteur vers l'émetteur.

10. Système selon l'une des revendications précédentes en combinaison avec la revendication 4, **caractérisé en ce que** le système comprend des moyens d'ajustage (7) du cône de rayonnement et d'acceptance desdits moyens d'émission et/ou des moyens de réception formant moyens de jonction, et/ou **en ce que** le système comprend des moyens de filtrage des rayonnements parasites.

11. Système selon l'une des revendications précédentes, **caractérisé en ce que** lesdits moyens d'émission et/ou des moyens de réception formant moyens de jonction sont agencés de manière à illuminer une zone comportant plusieurs desdits récepteurs, et **en ce que** lesdits moyens de réception et/ou d'émission des récepteurs équipent respectivement les récepteurs de manière à être en visibilité optique desdits moyens d'émission et/ou des moyens de réception formant moyens de jonction.

12. Système selon l'une des revendications 1 à 10, **caractérisé en ce que** lesdits moyens d'émission et/ou des moyens de réception formant moyens de jonction sont agencés à proximité desdits moyens de réception et/ou d'émission équipant un récepteur de manière à n'illuminer uniquement celui-ci.

13. Système selon la revendication précédente, **caractérisé en ce qu'**une pièce (11) de guidage est insérée entre l'extrémité de la fibre optique et les moyens de réception et/ou d'émission équipant le récepteur.

14. Système selon la revendication précédente, **caractérisé en ce que** ladite pièce de guidage est comprise dans un panneau (9) de support dudit récepteur et **en ce que**, sur une longueur déterminée, la fibre optique longe le panneau ou est comprise dans celui-ci.

## Claims

1. Digital signal transmission system for a space vehicle, comprising at least one infrared signal transmitter (MC, E2) and at least one infrared signal receiver (E1-E9) and a transmission link (P1, P2) between the transmitter and the receiver, **characterized in that** the link between said transmitter and said receiver comprises a first part (P1) formed by optical fibre defined by a guided propagation mode able to transmit said digital signals (TM, TC), converted into infrared signals in a guided manner, and a second part (P2) following said first part and defined by a radiated propagation mode in free space, and junction means (D1-D6) between the first and the second parts in order to transmit signals between the first and the second part.

2. System according to Claim 1, **characterized in that** the transmitter and/or the receiver comprises control means (MC) for the emission of remote-control signals, and/or a piece of equipment (E2) capable of transmitting telemetry signals from the transmitter to the destination.

3. System according to Claim 1 or 2, **characterized in that** said first part made of optical fibre is able to convey the infrared signals in a bidirectional manner.

4. System according to one of the preceding claims, **characterized in that** the junction means between the first and the second parts comprise transmitter means (D1, D2, D4-D6) for transmitting in free space infrared signals conveyed in the first part, these latter transmitter means being able to radiate said infrared signals towards receiver means (D1', D2') for receiving radiated infrared signals of the receiver, and/or receiver means (D3) for receiving infrared signals conveyed in free space in the second part, these latter receiver means being able to receive said infrared signals from infrared signal transmitter means (D3') of the receiver.

5. System according to one of the preceding claims, **characterized in that** said transmitter and receiver means of the transmitter and of the receiver are able to operate in a bidirectional manner.

6. System according to one of the preceding claims, **characterized in that** said transmitter and receiver means of the transmitter and of the receiver respectively comprise an infrared diode and a photoreceptor.

7. System according to one of the preceding claims, **characterized in that** a single optical fibre is used to produce the link of said first part.

8. System according to one of the preceding claims, **characterized in that** the communications protocol governing the communication between said transmitter and receiver is a master-slave protocol in which the transmitter is the master and the receiver is the slave.

9. System according to one of the preceding claims in combination with Claim 3, **characterized in that** two different wavelengths are used in said first optical fibre part, a first wavelength for the transmission of infrared signals from the transmitter to the receiver and the second for the transmission of infrared signals from the receiver to the transmitter.

10. System according to one of the preceding claims in combination with Claim 4, **characterized in that** the system comprises adjustment means (7) for adjusting the ray cone and the acceptance of said transmitter means and/or receiver means forming junction means, and/or **in that** the system comprises means for filtering interference radiation.

11. System according to one of the preceding claims, **characterized in that** said transmitter means and/or receiver means forming junction means are set up so as to illuminate an area including several said receivers, and **in that** said receiver and/or transmitter means of the receivers respectively equip the receivers so as to be optically visible from said transmitter means and/or receiver means forming junction means.

12. System according to one of Claims 1 to 10, **characterized in that** said transmitter means and/or receiver means forming junction means are set up close to said receiver and/or transmitter means equipping a receiver so as to illuminate only this receiver.

13. System according to the preceding Claim, **characterized in that** a guide piece (11) is inserted between the end of the optical fibre and the receiver and/or transmitter means equipping the receiver.

14. System according to the preceding Claim, **characterized in that** said guide piece is included in a supporting panel (9) for said receiver and **in that**, at a determined length, the optical fibre runs along the panel or is included in this.

## Patentansprüche

1. System zur Übertragung von digitalen Signalen für ein Raumfahrzeug, das mindestens einen Sender (MC, E2) von Infrarotsignalen und mindestens einen Empfänger (E1-E9) von Infrarotsignalen und eine Übertragungsverbindung (P1, P2) zwischen dem Sender und dem Empfänger aufweist, **dadurch gekennzeichnet, dass** die Verbindung zwischen dem Sender und dem Empfänger einen ersten, von einer Lichtleitfaser gebildeten Bereich (P1), der durch einen Modus der geführten Ausbreitung definiert wird, der die in Infrarotsignale umgewandelten digitalen Signale (TM, TC) geführt übertragen kann, und einen zweiten, auf den ersten Bereich folgenden und von einem Modus der im freien Raum ausgestrahlten Ausbreitung definierten Bereich (P2), und Übergangsmittel (D1-D6) zwischen dem ersten und dem zweiten Bereich zur Übertragung der Signale zwischen dem ersten und dem zweiten Bereich aufweist.

2. System nach Anspruch 1, **dadurch gekennzeichnet, dass** der Sender und/oder der Empfänger Steuermittel (MC) zum Senden von Fernsteuerungssignalen und/oder eine Einrichtung (E2) aufweist, die fähig ist, an den Sender Fernmesssignale zu senden.

3. System nach Anspruch 1 oder 2, **dadurch gekennzeichnet, dass** der erste Bereich aus Lichtleitfaser fähig ist, die Infrarotsignale bidirektional zu übertragen.

4. System nach einem der vorhergehenden Ansprüche, **dadurch gekennzeichnet, dass** die Übergangsmittel zwischen dem ersten und dem zweiten Bereich Mittel (D1, D2, D4-D6) zum Senden der im ersten Bereich übermittelten Infrarotsignale im freien Raum, wobei diese letzteren Sendemittel fähig sind, die Infrarotsignale zu Mitteln (D1', D2') zum Empfang von ausgestrahlten Infrarotsignalen des Empfängers auszustrahlen, und/oder Mittel (D3) zum Empfang der im zweiten Bereich im freien Raum übermittelten Infrarotsignale aufweist, wobei diese letzteren Empfangsmittel fähig sind, die Infrarotsignale von Mitteln (D3') zum Senden von Infrarotsignalen des Empfängers zu empfangen.

5. System nach einem der vorhergehenden Ansprüche, **dadurch gekennzeichnet, dass** die Sende- und Empfangsmittel des Senders und des Empfängers fähig sind, bidirektional zu arbeiten.

6. System nach einem der vorhergehenden Ansprüche, **dadurch gekennzeichnet, dass** die Sende- und Empfangsmittel des Senders und des Empfängers je eine Infrarotdiode und einen Fotoempfänger aufweisen.

7. System nach einem der vorhergehenden Ansprüche, **dadurch gekennzeichnet, dass** eine einzige Lichtleitfaser verwendet wird, um die Verbindung des ersten Bereichs herzustellen.

8. System nach einem der vorhergehenden Ansprüche, **dadurch gekennzeichnet, dass** das Kommunikationsprotokoll, das die Kommunikation zwischen dem Sender und dem Empfänger regelt, ein Protokoll vom Typ Master-Slave ist, bei dem der Sender der Master und der Empfänger der Slave ist.

9. System nach einem der vorhergehenden Ansprüche in Kombination mit Anspruch 3, **dadurch gekennzeichnet, dass** zwei unterschiedliche Wellenlängen im ersten Bereich aus Lichtleitfaser verwendet werden, eine erste der Wellenlängen für die Übertragung der Infrarotsignale vom Sender zum Empfänger und die zweite für die Übertragung der Infrarotsignale vom Empfänger zum Sender.

10. System nach einem der vorhergehenden Ansprüche in Kombination mit Anspruch 4, **dadurch gekennzeichnet, dass** das System Einstellmittel (7) des Strahlungs- und Akzeptanzkegels der Sendemittel und/oder der Übergangsmittel bildenden Empfangsmittel aufweist, und/oder dass das System Filtermittel für die Störstrahlungen aufweist.

11. System nach einem der vorhergehenden Ansprüche, **dadurch gekennzeichnet, dass** die Sendemittel und/oder die Übergangsmittel bildenden Empfangsmittel so angeordnet sind, dass sie eine Zone beleuchten, die mehrere Empfänger aufweist, und dass die Empfangs-und/oder Sendemittel der Empfänger je die Empfänger bestücken, um in optischer Sichtbarkeit der Sendemittel und/oder der Übergangsmittel bildenden Empfangsmittel zu sein.

12. System nach einem der Ansprüche 1 bis 10, **dadurch gekennzeichnet, dass** die Sendemittel und/oder Übergangsmittel bildenden Empfangsmittel in der Nähe der Empfangs- und/oder Sendemittel angeordnet sind, die einen Empfänger bestücken, um nur diesen zu beleuchten.

13. System nach dem vorhergehenden Anspruch, **dadurch gekennzeichnet, dass** ein Führungsbauteil (11) zwischen das Ende der Lichtleitfaser und die Empfangs- und/oder Sendemittel eingefügt ist, die den Empfänger bestücken.

14. System nach dem vorhergehenden Anspruch, **dadurch gekennzeichnet, dass** das Führungsbauteil in einer Trägerplatte (9) des Empfängers enthalten ist, und dass über eine bestimmte Länge die Lichtleitfaser an der Platte entlang läuft oder in ihr enthalten ist.
